(19) Europäisches Patentamt
European Patent Office
Office européen des brevets

(11) **EP 4 661 515 A1**

(12) **EUROPEAN PATENT APPLICATION**
published in accordance with Art. 153(4) EPC

(43) Date of publication:
**10.12.2025 Bulletin 2025/50**

(21) Application number: **24750527.4**

(22) Date of filing: **30.01.2024**

(51) International Patent Classification (IPC):
**H04W 52/14** (2009.01)   **H04W 52/28** (2009.01)
**H04W 52/32** (2009.01)   **H04W 52/42** (2009.01)
**H04W 8/24** (2009.01)   **H04B 7/0404** (2017.01)
**H04B 7/0426** (2017.01)   **H04L 5/00** (2006.01)
**H04W 52/36** (2009.01)

(52) Cooperative Patent Classification (CPC):
**H04B 7/0404; H04B 7/0426; H04L 5/00;
H04W 8/24; H04W 52/14; H04W 52/28;
H04W 52/32; H04W 52/36; H04W 52/42**

(86) International application number:
**PCT/KR2024/001376**

(87) International publication number:
**WO 2024/162729 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.01.2023   KR 20230011936
12.05.2023   KR 20230061770**

(71) Applicant: **LG Electronics Inc.
Yeongdeungpo-gu
Seoul 07336 (KR)**

(72) Inventors:
• **PARK, Haewook**
  **Seoul 06772 (KR)**
• **KANG, Jiwon**
  **Seoul 06772 (KR)**
• **KIM, Seonwook**
  **Seoul 06772 (KR)**

(74) Representative: **Maikowski & Ninnemann
Patentanwälte Partnerschaft mbB
Postfach 15 09 20
10671 Berlin (DE)**

(54) **SIGNAL TRANSMISSION/RECEPTION METHOD AND DEVICE IN WIRELESS COMMUNICATION SYSTEM**

(57)     A method by which a terminal transmits a signal in a wireless communication system, according to at least one of embodiments disclosed in the present disclosure, comprises: determining a power boosting level of an uplink phase tracking-reference signal (UL PT-RS) related to physical uplink shared channel (PUSCH) transmission based on eight transmission (Tx) antennas; and transmitting the UL PT-RS on the basis of the determined power boosting level, wherein the power boosting level can be determined on the basis of whether the PUSCH transmission based on the eight transmission antennas is full coherent codebook-based transmission, partial coherent codebook-based transmission or non-coherent codebook-based transmission.

**FIG. 12**

Determine PT-RS power boosting level — B05

Transmit UL PT-RS — B10

**Description**

### TECHNICAL FIELD

The disclosure relates to a wireless communication system, and more particularly, to a method and apparatus for transmitting or receiving a downlink/uplink radio signal in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the disclosure is to provide a method of efficiently performing wireless signal transmission/reception procedures and an apparatus therefor.

It will be appreciated by persons skilled in the art that the objects that could be achieved with the disclosure are not limited to what has been particularly described hereinabove and the above and other objects that the disclosure could achieve will be more clearly understood from the following detailed description.

### TECHNICAL SOLUTION

According to an aspect, a method of transmitting a signal by a user equipment (UE) in a wireless communication system may include determining a power boosting level of an uplink phase tracking-reference signal (UL PT-RS) related to a physical uplink shared channel (PUSCH) transmission based on eight transmission (Tx) antennas, and transmitting the UL PT-RS based on the determined power boosting level. The power boosting level may be determined based on whether the PUSCH transmission based on the eight Tx antennas is a full coherent codebook-based transmission, a partial coherent codebook-based transmission, or a non-coherent codebook-based transmission. The power boosting level for the full coherent codebook-based transmission may be determined based on $10\log_{10}(X)$, and X may be a number of PUSCH layers. The power boosting level for the non-coherent codebook-based transmission may be determined based on $10\log_{10}(Y)$, and Y may be a number of antenna ports of the UL PT-RS. The power boosting level for the partial coherent codebook-based transmission may be determined based on $10\log_{10}(Y*Z)$, and Z may be a number of PUSCH layers related to each coherent antenna group.

According to another aspect, a computer-readable recording medium having a program recorded thereon for performing the method of transmitting a signal may be provided.

According to another aspect, a UE for performing the method of transmitting a signal may be provided.

According to another aspect, a processing device for controlling a UE performing the method of transmitting a signal may be provided.

According to another aspect, a method of receiving a signal by a base station (BS) in a wireless communication system may include transmitting downlink control information (DCI) for scheduling a PUSCH transmission based on eight Tx antennas of a UE, and receiving a UL PT-RS related to the PUSCH transmission. A power boosting level of the UL PT-RS may be determined based on whether the PUSCH transmission based on the eight Tx antennas is a full coherent codebook-based transmission, a partial coherent codebook-based transmission, or a non-coherent codebook-based transmission. The power boosting level for the full coherent codebook-based transmission may be determined based on $10\log_{10}(X)$, and X may be a number of PUSCH layers. The power boosting level for the non-coherent codebook-based transmission may be determined based on $10\log_{10}(Y)$, and Y may be a number of antenna ports of the UL PT-RS. The power boosting level for the partial coherent codebook-based transmission may be determined based on $10\log_{10}(Y*Z)$, and Z may be a number of PUSCH layers related to each coherent antenna group.

According to another aspect, a BS for performing the method of receiving a signal may be provided.

The number Y of the antenna ports of the UL PT-RS may be set to 1 or 2.

Based on the PUSCH transmission being the full coherent codebook-based transmission, the power boosting level may be determined regardless of the number B of antenna ports of the UL PT-RS.

The power boosting level for the full coherent codebook-based transmission may be determined based on Table A,

[Table A]

| X | 1 | 2 | 3 | 4 | 5 | 6 | 7 | 8 |
|---|---|---|---|---|---|---|---|---|
| $=10\log_{10}(X)$ | 0 | 3.0 | 4.77 | 6.0 | 7.0 | 7.77 | 8.45 | 9 |

Z may be the number of PUSCH layers related to a coherent antenna group determined through a transmission precoding matrix index (TPMI).

A number of coherent antenna groups related to the partial coherent codebook-based transmission may be 2 or 4. Based on the number of coherent antenna groups related to the partial coherent codebook-based transmission being 2, Z may have a value of 4 or less.

Based on the number of coherent antenna groups related to the partial coherent codebook-based transmission being 4, Z may have a value of 2 or less.

Based on the number of coherent antenna groups related to the partial coherent codebook-based transmission being 4 and the number Y of antenna ports of the UL PT-RS being 2, one UL PT-RS antenna port may be shared per two coherent antenna groups.

## ADVANTAGEOUS EFFECTS

According to the disclosure, wireless signal transmission and reception may be efficiently performed in a wireless communication system.

It will be appreciated by persons skilled in the art that the effects that can be achieved with the disclosure are not limited to what has been particularly described hereinabove and other advantages of the disclosure will be more clearly understood from the following detailed description taken in conjunction with the accompanying drawings.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary PDSCH and acknowledgment/negative acknowledgment (ACK/NACK) transmission process.

FIG. 6 illustrates an exemplary PUSCH transmission process.

FIG. 7 illustrates an example of a channel state information (CSI) related procedure.

FIG. 8 illustrates a multi-TRP transmission.

FIG. 9 illustrates an exemplary partial coherent antenna configuration.

FIG. 10 illustrates another exemplary partial coherent antenna configuration.

FIG. 11 illustrates an implementation example of operations of a network and a user equipment (UE) according to an embodiment.

FIG. 12 illustrates an implementation example of an operation of a UE in a wireless communication system according to an embodiment.

FIG. 13 illustrates an implementation example of an operation of a base station (BS) in a wireless communication system according to an embodiment.

FIGS. 14 to 17 illustrate a communication system 1 and wireless devices applicable to the disclosure.

FIG. 18 illustrates a discontinuous reception (DRX) operation applicable to the disclosure.

## DETAILED DESCRIPTION

Embodiments of the disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the disclosure, for simplicity, this technology will be referred to as NR (New Radio or New RAT).

For the sake of clarity, 3GPP NR is mainly described, but the technical idea of the disclosure is not limited thereto.

In the disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

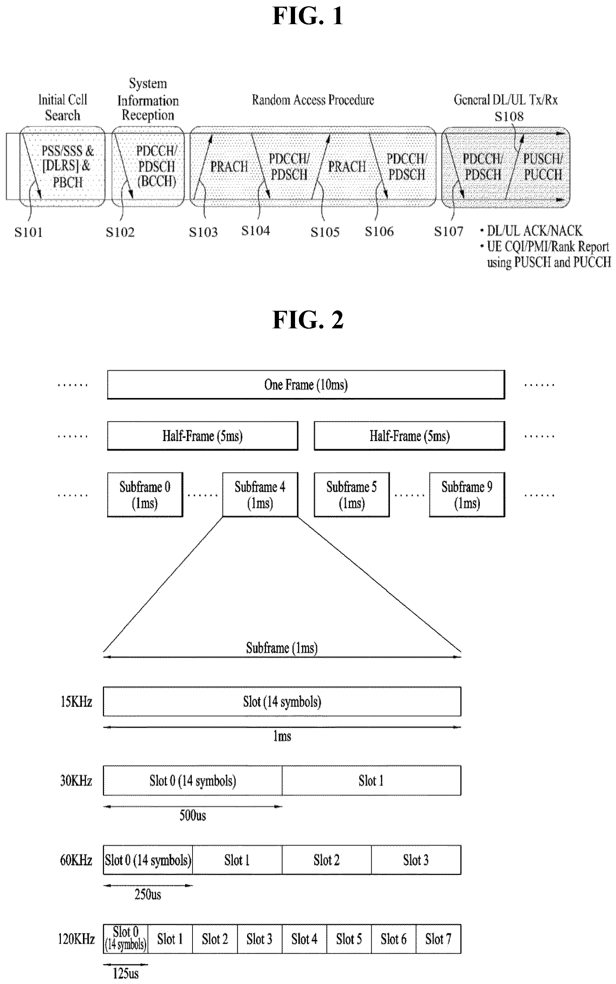

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot <br> $N^{frame,u}_{slot}$: Number of slots in a frame <br> $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

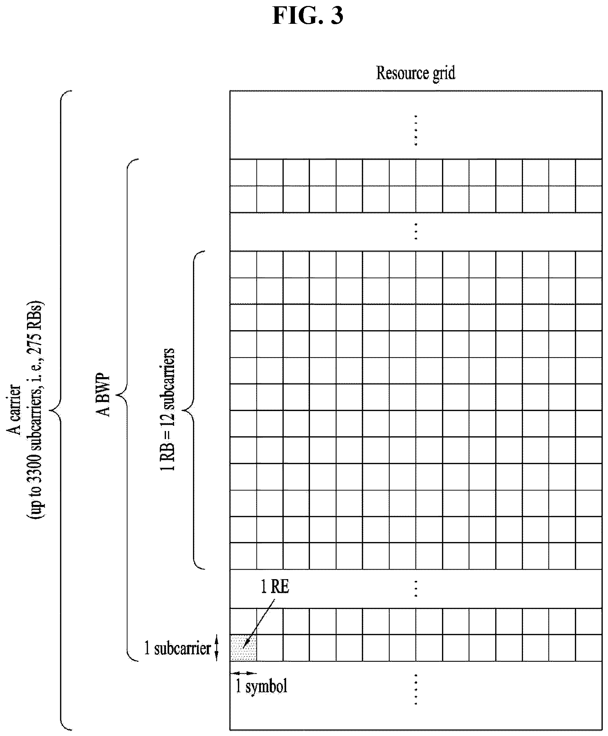

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

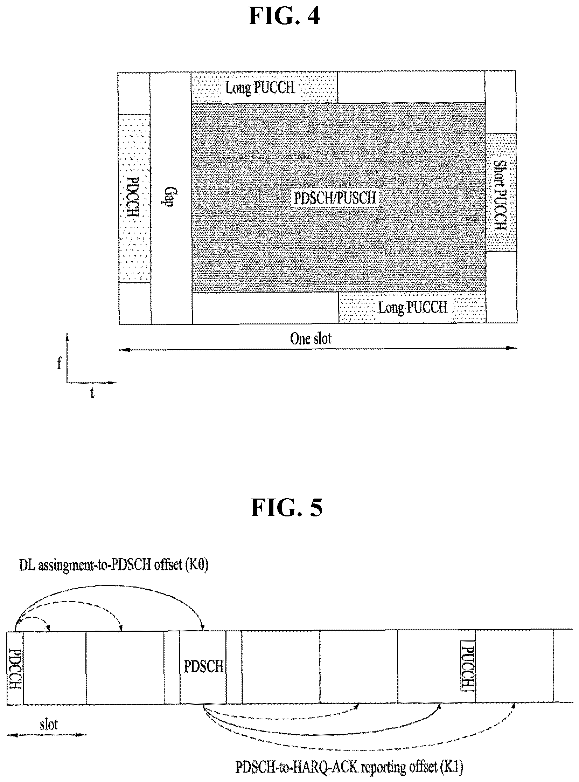

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

controlResourceSetId: A CORESET related to an SS.

monitoringSlotPeriodicityAndOffset: A PDCCH monitoring periodicity (in slots) and a PDCCH monitoring offset (in slots).

monitoringSymbolsWithinSlot: PDCCH monitoring symbols in a slot (e.g., the first symbol(s) of a CORESET).

nrofCandidates: The number of PDCCH candidates (one of 0, 1, 2, 3, 4, 5, 6, and 8) for each AL={1, 2, 4, 8, 16}.

An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |

(continued)

| DCI format | Usage |
|---|---|
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0 _1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

SR (Scheduling Request): Information used to request UL-SCH resources.

HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |

(continued)

| PUCCH format | Length in OFDM symbols $N_{symb}^{PUCCH}$ | Number of bits | Usage | Etc |
|---|---|---|---|---|
| 4 | 4-14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured to the UE may be configured for PUCCH transmission. At least a primary cell may be set as a cell for the PUCCH transmission. At least one PUCCH cell group may be configured to the UE based on at least one cell where the PUCCH transmission is configured, and each PUCCH cell group includes one or two or more cells. A PUCCH cell group may be simply referred to as a PUCCH group. The PUCCH transmission may be configured not only in the primary cell but also in a secondary cell (Scell). The primary cell belongs to a primary PUCCH group, and the PUCCH-SCell where the PUCCH transmission is configured belongs to a secondary PUCCH group. For cells belonging to the primary PUCCH group, a PUCCH on the primary cell may be used. For cells belonging to the secondary PUCCH group, a PUCCH on the PUCCH-SCell may be used.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

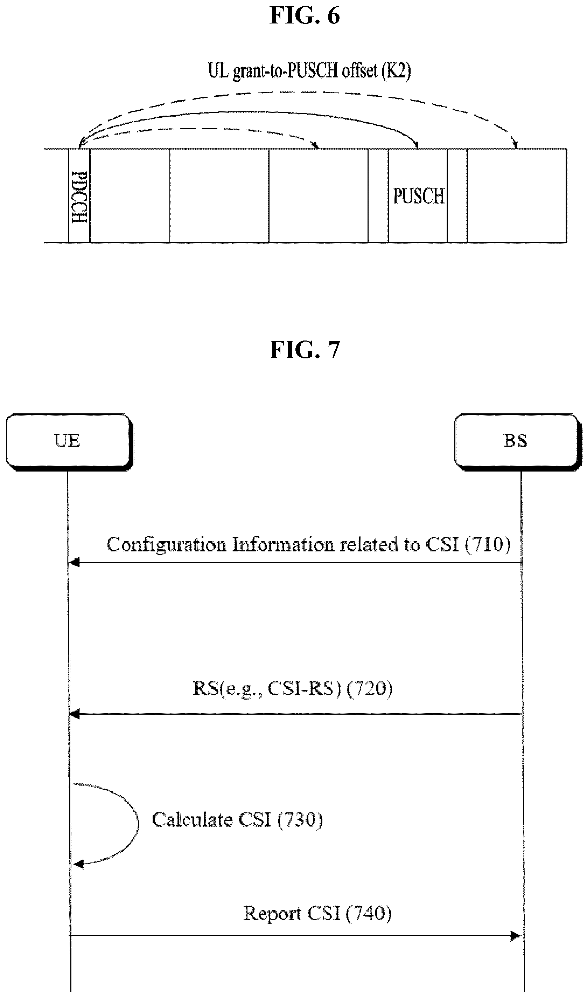

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.

- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a medium access control (MAC) control element (CE) indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of multiple TCI state configurations may be configured for the UE through a higher layer parameter PDSCH-Config. Each TCI state is associated with a QCL configuration parameter between one or two DL reference signals and the DM-RS port of a PDSCH. The QCL may include qcl-Type1 for a first DL RS and qcl-Type2 for a second DL RS. The QCL type may correspond to one of the followings.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

Operations related to multiple transmission and reception points (M-TRPs)

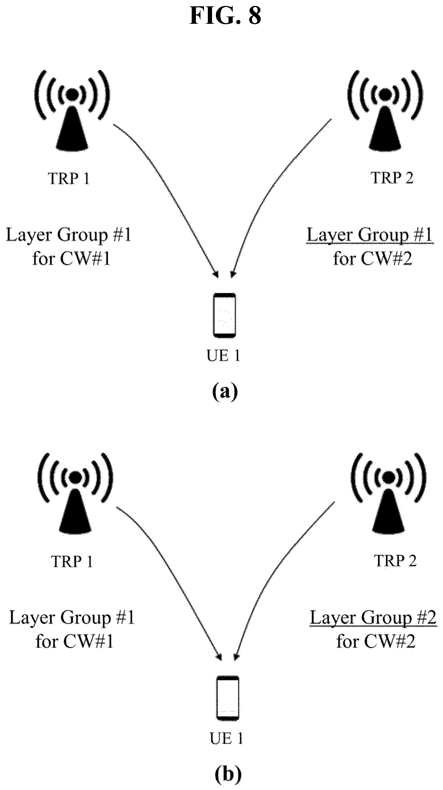

FIG. 8 illustrates multi-TRP (M-TRP) transmission. Referring to FIG. 8-(a), a group of layers transmitting the same codeword (CW) (or TB) correspond to different TRPs. Referring to FIG. 8-(b), different CWs are transmitted through layer groups of different TRPs. In this case, it may be assumed that the TBs corresponding to CW #1 and CW #2 in the drawing are the same. In other words, CW #1 and CW #2 mean that the same TB is converted into different CWs through channel coding, etc., by different TRPs. Therefore, it may be considered as an example of repeated transmission of the same TB. In the case of FIG. 8-(b), there may be a drawback of a higher coding rate corresponding to the TB, compared to FIG. 8-(a). However, FIG. 8-(b) has an advantage that, depending on the channel environment, the coding rate may be adjusted by indicating different values of redundancy version (RV) for encoded bits generated from the same TB, or the modulation order of each CW may be adjusted.

According to the method illustrated in FIGS. 8-(a) and 8-(b), the same TB is repeatedly transmitted through different layer groups. In addition, as each layer group is transmitted by different TRPs/panels, the probability that the UE receives data successfully may increase. This method is referred to as a spatial division multiplexing (SDM) based M-TRP URLLC transmission. The layers belonging to different layer groups are transmitted through DMRS ports that belong to different DMRS code division multiplexing (CDM) groups.

Although the aforementioned M-TRP-related content has been explained based on the SDM method using different layers, it may be extended and applied to an FDM method based on different frequency domain resources (e.g., RB/PRB sets) and/or a TDM method based on different time domain resources (e.g., slots, symbols, sub-symbols, etc.).

**PTRS power boosting for 8Tx UL codebook**

The disclosure relates to phase tracking-reference signal (PT-RS) power boosting for an 8Tx UL codebook-based transmission of a UE equipped with multiple antennas and/or multiple panels in an environment such as New Radio Access Technology (RAT) with multiple antennas/panels.

To improve the decoding capability of a PT-RS, PT-RS power boosting is supported in NR. Table 6 describes PT-RS power boosting defined in TS38.214 of the legacy NR standard.

[Table 6]

For partial-coherent and non-coherent codebook-based UL transmission, the actual number of UL PT-RS port(s) is determined based on TPMI(s) and/or number of layers which are indicated by *'Precoding information and number of layers'* field(s) in DCI format 0_1 and DCI format 0_2 or configured by higher layer parameter *precodingAndNumberOfLayers*:

- if the UE is configured with the higher layer parameter *maxNrofPorts* in *PTRS-UplinkConfig* set to 'n2', the actual UL PT-RS port(s) and the associated transmission layer(s) are derived from indicated TPMI(s) as:

- PUSCH antenna port 1000 and 1002 in indicated TPMI(s) share PT-RS port 0, and PUSCH antenna port 1001 and 1003 in indicated TPMI(s) share PT-RS port 1.

- UL PT-RS port 0 is associated with the UL layer 'x' of layers which are transmitted with PUSCH antenna port 1000 and PUSCH antenna port 1002 in indicated TPMI(s), and UL PT-RS port 1 is associated with the UL layer 'y' of layers which are transmitted with PUSCH antenna port 1001 and PUSCH antenna port 1003 in indicated TPMI(s), where 'x' and/or 'y' are given by DCI parameter *'PTRS-DMRS association'* as shown in DCI format 0_1 and DCI format 0_2 described in Clause 7.3.1 of [5, TS38.212].

When the UE is scheduled with $Q_p=\{1,2\}$ PT-RS port(s) in uplink and the number of scheduled layers is $n_{layer}^{PUSCH}$,

- If the UE is configured with higher layer parameter *ptrs-Power*, the PUSCH to PT-RS power ratio per layer per RE $\rho_{PTRS}^{PUSCH}$ is given by $\rho_{PTRS}^{PUSCH} = -\alpha_{PTRS}^{PUSCH}\,[dB]$, where $\alpha_{PTRS}^{PUSCH}$ is shown in the Table 6.2.3.1-3 according to the higher layer parameter *ptrs-Power*, the PT-RS scaling factor $\beta_{PTRS}$ specified in clause 6.4.1.2.2.1 of [4, TS 38.211] is given by

$$\beta_{PTRS} = 10^{-\frac{\rho_{PTRS}^{PUSCH}}{20}}$$ and also on the *'Precoding Information and Number of Layers'* field in DCI.

- The UE shall assume *ptrs-Power* in *PTRS-UplinkConfig* is set to state "00" in Table

6.2.3.1-3 if not configured or in case of non-codebook based PUSCH.

**Table 6.2.3.1-3: Factor related to PUSCH to PT-RS power ratio per layer per RE $\alpha_{PTRS}^{PUSCH}$**

| UL-PTRS-power / $\alpha_{PTRS}^{PUSCH}$ | The number of PUSCH layers ( $n_{layer}^{PUSCH}$ ) | | | | | | | |
|---|---|---|---|---|---|---|---|---|
| | 1 | 2 | | 3 | | 4 | | |
| | All cases | Full coherent | Partial and non-coherent and non-codebook based | Full coherent | Partial and non-coherent and non-codebook based | Full coherent | Partial coherent | Non-coherent and non-codebook based |
| 00 | 0 | 3 | $3Q_p\text{-}3$ | 4.77 | $3Q_p\text{-}3$ | 6 | $3Q_p$ | $3Q_p\text{-}3$ |
| 01 | 0 | 3 | 3 | 4.77 | 4.77 | 6 | 6 | 6 |
| 10 | Reserved | | | | | | | |
| 11 | Reserved | | | | | | | |

In Table 6, Qp may represent the number of PTRS ports configured/scheduled for the UE, and 1 or 2 PTRS ports may be configured/indicated in the legacy system. In an 8Tx UL transmission, the number of PTRSs may increase to up to 4. NR supports two transmission methods, codebook-based UL and non-codebook-based UL, and according to the standard, PTRS power boosting is performed based on "Table 6.2.3.1-3" captured in Table 6.

Hereinafter, PTRS power boosting is proposed when the number of PUSCH layers increases to 8 and/or the number of PTRS ports (e.g., Qp) is set to up to 4.

First, an antenna layout of a UE for an 8Tx PUSCH transmission will be described.

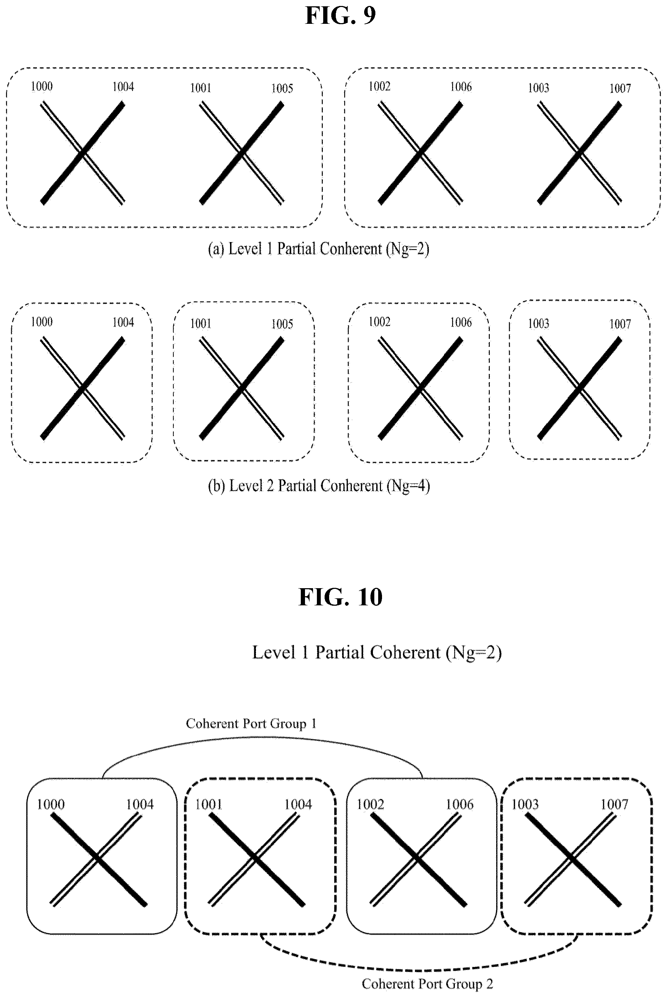

FIG. 9 illustrates an exemplary 8Tx partial coherency antenna configuration. In each of FIGS. 9(a) and 9(b), a dotted line represents a coherent port group. Ng is the number of coherent port groups. Ng=2 may mean coherent group level 1, and Ng=4 may mean coherent group level 2. FIG. 9 illustrates two types of partial coherency according to coherency levels.

FIG. 10 illustrates another exemplary antenna configuration corresponding to 8Tx Partial Coherency Level 1. Specifically, compared to FIG. 9(a), FIG. 10 illustrates a case of different port grouping according to port indexes at Partial Coherency Level 1.

For reference, in the case of a fully coherent TPMI, all ports may be grouped into a single coherent port group, whereas in a non-coherent case, there is only one coherent port within a coherent port group. For example, a coherent port group may be a set of ports where coherency is maintained from SRS transmission to PUSCH transmission. Each coherent port group may correspond to each panel. And/or, an associated SRS resource or SRS resource set may be individually configured for each coherent port group.

In FIGS. 9 and 10, port indexing may be based on SRS or PUSCH ports. Each PTRS port may be associated with one or more PUSCH ports depending on a configuration.

## 1. Proposal 1

A fully coherent UE may perform PT-RS power boosting regardless of setting of the number (e.g., Qp) of PT-RS ports, as illustrated in Table 7. For example, PT-RS power boosting values as illustrated in Table 7 may be specified/set as default values.

[Table 7]

| Factor related to PUSCH to PT-RS power ratio per layer per RE $\alpha^{PUSCH}_{PTRS}$ | | | | | | | | |
|---|---|---|---|---|---|---|---|---|
| The number of PUSCH layers ( $n^{PUSCH}_{layer}$ ) | 1 | 2 | 3 | 4 | 5 | 6 | 7 | 8 |
| **UL-PTRS-power** / $\alpha^{PUSCH}_{PTRS}$ $=10\log_{10}( n^{PUSCH}_{layer} )$ | 0 | 3.0 | 4.77 | 6.0 | 7.0 | 7.77 | 8.45 | 9 |

The values in Table 7 are based on 100log10(the number of PUSCH layers). For a fully coherent UE supporting 8-TX (up to 8 UL layers) transmission, a PTRS power boosting level may be determined based on 10log10(the number of PUSCH layers).

In Proposal 1, the UE may operate based on its UE capability. For example, when the UE reports full coherent as its UE capability, it may operate according to Proposal 1.

In Proposal 1, a maximum power boosting level is approximately 9dB (for 8 layers).

## (1) Proposal 1-1

When the power difference between a PUSCH and a boosted RS becomes too large, a problem may occur in decoding the PUSCH. That is, due to the boosting effect of the RS, the peak of REs to which the RS is mapped is too large, making it difficult to detect REs to which data is mapped. This detection capability may vary depending on the capability of a BS. For example, a high-capable BS may well detect a PT-RS boosted to up to 9dB and a PUSCH, whereas a low-capable BS may only be able to detect a PT-RS boosted to up to a specific level (e.g., 6dB) and a PUSCH. Therefore, the following is proposed.

The BS may configure/indicate a limit value (e.g., X) for PT-RS power boosting to the UE, and the UE may determine UL-PTRS-power ($\alpha^{PUSCH}_{PTRS}$) based on the X value and the number of layers and/or the number of PT-RSs.

In an embodiment of Proposal 1-1, a 6dB power boosting limit may be considered. In this case, the BS may indicate a max value of 6dB (in this case, X=6) to the UE, and based on this value, PT-RS power is determined as follows. That is, from layer 5 onwards, it is determined as min(6, Y), where Y is a boosted power value determined based on the number of layers and the number of PT-RSs. For example, according to the table in Proposal 1, the Y values are 7.0, 7.8, 8.5, and 9.0dB, and a boosted power value is determined as in the following table by the min operation.

[Table 8]

| Factor related to PUSCH to PT-RS power ratio per layer per RE $\alpha^{PUSCH}_{PTRS}$ | | | | | | | | |
|---|---|---|---|---|---|---|---|---|
| The number of PUSCH layers ( $n^{PUSCH}_{layer}$ ) | 1 | 2 | 3 | 4 | 5 | 6 | 7 | 8 |
| **UL-PTRS-power** / $\alpha^{PUSCH}_{PTRS}$ | 0 | 3.0 | 4.77 | 6.0 | 6.0 | 6.0 | 6.0 | 6.0 |

In Proposal 1-1, although there is a limit due to BS implementation, it may also affect UE power boosting, for example, an error vector magnitude (EVM) or a UE RF dynamic range, due to UE implementation. Therefore, as a modified example of Proposal 1-1, the UE may report information such as "whether to perform up to 9dB power boosting" to the BS by a capability report. The limit value may be used as it is based on a UE capability value, or the BS may configure a specific value (e.g., a value less than or equal to the capability) by referring to the capability report value.

For example, when the UE reports that a maximum achievable boosting factor is 6dB, only 6dB PT-RS power boosting is performed for 5 layers or more. Alternatively, the limit value configured by the BS may be set based on the UE capability value and/or the limit value based on the BS implementation in Proposal 1-1. Alternatively, a specific limit value (e.g., 6dB) may be defined in the specifications, and PT-RS power boosting is performed only to up to the limit value, without exceeding it.

Alternatively, when the UE reports the max PTRS power boosting level as the UE capability, the BS may set a table (e.g., a table index/parameter) matching the corresponding power boosting level. That is, the UE does not expect to be configured with a table that includes the max PTRS power boosting level.

In another example, when the UE reports information (e.g., an index/parameter) about a supported PTRS power boosting table by a capability report, the BS may configure table information matching the UE capability for the UE. That is, the UE does not expect to be configured with a table other than what it reported. Alternatively, a default table may be configured, and for a configuration other than the UE capability, the UE may operate based on the default table.

Although Proposal 1/1-1 has been described in the context of a full coherent codebook, it may be extended to a partial coherent codebook and/or a non-coherent codebook described later.

Next, a partial coherent UE will be described. As illustrated in FIG. 9, for an 8Tx UE, there may be two types of partial coherency, which are referred to as (a) partial coherency level 1 and (b) partial coherency level 2 for convenience. Partial coherency level 1 means that 4 ports form one coherent port group. In the case of partial coherency level 2, each coherent port group includes 2 ports.

For partial coherent level 1, a UL TPMI configuration described in Equation 1 may be considered. Ports are indexed based on FIG. 10, and hereinafter, for convenience of notation, a UL TPMI matrix according to Equation 1 is described as partial coherency level 1.

[Equation 1]

$$\begin{bmatrix} x_1 \\ 0 \\ x_2 \\ 0 \\ x_3 \\ 0 \\ x_4 \\ 0 \end{bmatrix}, \begin{bmatrix} 0 \\ y_1 \\ 0 \\ y_2 \\ 0 \\ y_3 \\ 0 \\ y_4 \end{bmatrix}$$

For example, in Equation 1, x1 to x4 may be related to ports belonging to coherent port group 1, and y1 to y4 may be related to ports belonging to coherent port group 2 in FIG. 10.

For reference, the TPMI matrix is represented as Equation 2 based on the partial coherency of FIG. 9.

[Equation 2]

$$\begin{bmatrix} x_1 \\ x_2 \\ 0 \\ 0 \\ x_3 \\ x_4 \\ 0 \\ 0 \end{bmatrix}, \begin{bmatrix} 0 \\ 0 \\ y_1 \\ y_2 \\ 0 \\ 0 \\ y_3 \\ y_4 \end{bmatrix}$$

For example, in Equation 2, x1, x2, x3, and x4 may be related to ports 1000, 1001, 1004, and 1005 in FIG. 9(a), and y1, y2, y3, and y4 may be related to ports 1002, 1003, 1006, and 1007 in FIG. 9(a).

Equation 1/Equation 2 is an example of a rank-1 TPMI, and ports within a coherent port group may share power. In the case of partial coherent level 1, since 4 ports form one group, up to 4 layers may be configured, and up to 6dB PT-RS power boosting may be configured.

However, when one PT-RS port is configured during PT-RS power boosting, power from other unused (PUSCH) antenna ports (e.g., ports corresponding to 0 in Equation 1) should be borrowed for the boosting, which increases the dynamic range of the UE during UE implementation.

Therefore, when one PT-RS port is configured, and a plurality of layers are configured only with all or some of (PUSCH) antenna ports within a partial coherent port group, PT-RS power boosting is not performed.

For example, when DCI indicates using a TPMI corresponding to Equation 3 and one PT-RS port is configured, PT-RS power boosting may not be performed.

[Equation 3]

$$
\begin{bmatrix}
x_{11} & x_{21} \\
0 & 0 \\
x_{12} & x_{22} \\
0 & 0 \\
x_{13} & x_{23} \\
0 & 0 \\
x_{14} & x_{24} \\
0 & 0
\end{bmatrix},
\begin{bmatrix}
x_{11} & 0 \\
0 & y_{11} \\
x_{12} & 0 \\
0 & y_{12} \\
x_{13} & 0 \\
0 & y_{13} \\
x_{14} & 0 \\
0 & y_{14}
\end{bmatrix}
$$

Referring to Equation 3, for a 2-layer transmission, the number of PT-RS ports may be set to 1 for the left matrix. In this case, to perform power boosting in a layer domain, power should be shared from ports corresponding to 0, which increases UE implementation complexity and cost. On the other hand, two PT-RS ports may be configured for the right matrix in Equation 3, and in this case, 3dB boosting is possible by borrowing power from REs to which the PT-RS is mapped. Obviously, even in the case of the right matrix, power boosting is not possible when one PT-RS is configured.

[Equation 4]

$$
\begin{bmatrix}
x_{11} & x_{21} & x_{31} \\
0 & 0 & 0 \\
x_{12} & x_{22} & x_{32} \\
0 & 0 & 0 \\
x_{13} & x_{23} & x_{33} \\
0 & 0 & 0 \\
x_{14} & x_{24} & x_{34} \\
0 & 0 & 0
\end{bmatrix},
\begin{bmatrix}
x_{11} & x_{21} & 0 \\
0 & 0 & y_{11} \\
x_{12} & x_{22} & 0 \\
0 & 0 & y_{12} \\
x_{13} & x_{23} & 0 \\
0 & 0 & y_{13} \\
x_{14} & x_{24} & 0 \\
0 & 0 & y_{14}
\end{bmatrix}
$$

Referring to Equation 4, for a 3-layer transmission, the number of PT-RS ports may be set to 1 for the left matrix. In this case, to perform power boosting in the layer domain, power should be shared from ports corresponding to 0, which increases UE implementation complexity and cost. Accordingly, power boosting is not performed. On the other hand, two PT-RS ports may be configured for the right matrix, and in this case, 3dB boosting is possible by borrowing power from REs to which the PT-RS is mapped.

[Equation 5]

$$
\begin{bmatrix}
x_{11} & x_{21} & x_{31} & x_{41} \\
0 & 0 & 0 & 0 \\
x_{12} & x_{22} & x_{32} & x_{42} \\
0 & 0 & 0 & 0 \\
x_{13} & x_{23} & x_{33} & x_{43} \\
0 & 0 & 0 & 0 \\
x_{14} & x_{24} & x_{34} & x_{44} \\
0 & 0 & 0 & 0
\end{bmatrix}
$$

[Equation 6]

$$\begin{bmatrix} x_{11} & x_{21} & x_{31} & 0 \\ 0 & 0 & 0 & y_{11} \\ x_{12} & x_{22} & x_{32} & 0 \\ 0 & 0 & 0 & y_{12} \\ x_{13} & x_{23} & x_{33} & 0 \\ 0 & 0 & 0 & y_{13} \\ x_{14} & x_{24} & x_{34} & 0 \\ 0 & 0 & 0 & y_{14} \end{bmatrix}$$

[Equation 7]

$$\begin{bmatrix} x_{11} & x_{21} & 0 & 0 \\ 0 & 0 & y_{11} & y_{21} \\ x_{12} & x_{22} & 0 & 0 \\ 0 & 0 & y_{12} & y_{22} \\ x_{13} & x_{23} & 0 & 0 \\ 0 & 0 & y_{13} & y_{23} \\ x_{14} & x_{24} & 0 & 0 \\ 0 & 0 & y_{14} & y_{24} \end{bmatrix}$$

In Equation 5, for power boosting in the layer domain, when the number of PT-RS ports is set to 1, the power boosting is not performed. In Equation 6, when the number of PT-RS ports is set to 2, one PT-RS port may borrow power from REs to which another PT-RS port is mapped to enable 3dB boosting.

In Equation 7, each coherent port group supports 2 layers out of 4 layers. In this case, since power allocated per port is uniform, a high dynamic range of (PUSCH) ports is not required, thereby facilitating power sharing. Therefore, when the number of PT-RS ports is set to 1, 3dB boosting is possible, and when the number of PT-RS ports is set to 2, 6dB power boosting (3dB from PUSCH port domain + 3dB from PT-RS port domain) is possible.

[Equation 8]

$$\begin{bmatrix} x_{11} & x_{21} & x_{31} & x_{41} & 0 \\ 0 & 0 & 0 & 0 & y_{11} \\ x_{12} & x_{22} & x_{32} & x_{42} & 0 \\ 0 & 0 & 0 & 0 & y_{12} \\ x_{13} & x_{23} & x_{33} & x_{43} & 0 \\ 0 & 0 & 0 & 0 & y_{13} \\ x_{14} & x_{24} & x_{34} & x_{44} & 0 \\ 0 & 0 & 0 & 0 & y_{14} \end{bmatrix}$$

[Equation 9]

$$\begin{bmatrix} x_{11} & x_{21} & x_{31} & 0 & 0 \\ 0 & 0 & 0 & y_{11} & y_{21} \\ x_{12} & x_{22} & x_{32} & 0 & 0 \\ 0 & 0 & 0 & y_{12} & y_{22} \\ x_{13} & x_{23} & x_{33} & 0 & 0 \\ 0 & 0 & 0 & y_{13} & y_{23} \\ x_{14} & x_{24} & x_{34} & 0 & 0 \\ 0 & 0 & 0 & y_{14} & y_{24} \end{bmatrix}$$

In Equation 8/Equation 9, for power boosting in the layer domain, when the number of PT-RS ports is set to 1, the power boosting is not performed. When the number of PT-RS ports is set to 2, one PT-RS port may borrow power from REs to which another PT-RS port is mapped to enable 3dB boosting.

In Equation 9, when the RF dynamic range or other capabilities of the UE are high, PUSCH port-domain power boosting may be possible, and when there is one PT-RS port, 3dB boosting is possible by PUSCH-domain power boosting. When there are two PT-RS ports, 6dB power boosting (3dB from PUSCH port domain + 3dB from PT-RS port domain) is possible.

[Equation 10]

$$\begin{bmatrix} x_{11} & x_{21} & x_{31} & x_{41} & 0 & 0 \\ 0 & 0 & 0 & 0 & y_{11} & y_{21} \\ x_{12} & x_{22} & x_{32} & x_{42} & 0 & 0 \\ 0 & 0 & 0 & 0 & y_{12} & y_{22} \\ x_{13} & x_{23} & x_{33} & x_{43} & 0 & 0 \\ 0 & 0 & 0 & 0 & y_{13} & y_{23} \\ x_{14} & x_{24} & x_{34} & x_{44} & 0 & 0 \\ 0 & 0 & 0 & 0 & y_{14} & y_{24} \end{bmatrix}$$

[Equation 11]

$$\begin{bmatrix} x_{11} & x_{21} & x_{31} & 0 & 0 & 0 \\ 0 & 0 & 0 & y_{11} & y_{21} & y_{31} \\ x_{12} & x_{22} & x_{32} & 0 & 0 & 0 \\ 0 & 0 & 0 & y_{12} & y_{22} & y_{32} \\ x_{13} & x_{23} & x_{33} & 0 & 0 & 0 \\ 0 & 0 & 0 & y_{13} & y_{23} & y_{33} \\ x_{14} & x_{24} & x_{34} & 0 & 0 & 0 \\ 0 & 0 & 0 & y_{14} & y_{24} & y_{34} \end{bmatrix}$$

In Equation 10, for power boosting in the layer domain, when the number of PT-RS ports is set to 1, the power boosting is not performed. When the number of PT-RS ports is set to 2, one PT-RS port may borrow power from REs to which another PT-RS port is mapped to enable 3dB boosting.

In another example, in Equation 10, when the RF dynamic range or other capabilities of the UE are high, PUSCH port-domain power boosting may be possible, and when there is one PT-RS port, 3dB boosting is possible by PUSCH-domain power boosting. When there are two PT-RS ports, 6dB power boosting (3dB from PUSCH port domain + 3dB from PT-RS port domain) is possible.

In Equation 11, PUSCH port-domain power boosting may be possible. In this case, 7.77dB power boosting (4.77dB from PUSCH port domain + 3dB from PT-RS port domain) is possible. Herein, 7.77dB is the result of 10*log(6), and hereinafter, 10*log(6) is denoted as 7.77dB for convenience.

[Equation 12]

$$\begin{bmatrix} x_{11} & x_{21} & x_{31} & x_{41} & 0 & 0 & 0 \\ 0 & 0 & 0 & 0 & y_{11} & y_{21} & y_{31} \\ x_{12} & x_{22} & x_{32} & x_{42} & 0 & 0 & 0 \\ 0 & 0 & 0 & 0 & y_{12} & y_{22} & y_{32} \\ x_{13} & x_{23} & x_{33} & x_{43} & 0 & 0 & 0 \\ 0 & 0 & 0 & 0 & y_{13} & y_{23} & y_{33} \\ x_{14} & x_{24} & x_{34} & x_{44} & 0 & 0 & 0 \\ 0 & 0 & 0 & 0 & y_{14} & y_{24} & y_{34} \end{bmatrix}$$

In Equation 12, for power boosting in the layer domain, when the number of PT-RS ports is set to 1, the power boosting is not performed. When the number of PT-RS ports is set to 2, one PT-RS port may borrow power from REs to which another PT-RS port is mapped to enable 3dB boosting.

In another example, in Equation 12, when the RF dynamic range or other capabilities of the UE are high, PUSCH port-domain power boosting may be possible. When there is one PT-RS port, 4.77dB boosting is possible by PUSCH-domain power boosting. When there are two PT-RS ports, 7.77dB power boosting (4.77dB from PUSCH port domain + 3dB from PT-RS port domain) is possible.

[Equation 13]

$$\begin{bmatrix} x_{11} & x_{21} & x_{31} & x_{41} & 0 & 0 & 0 & 0 \\ 0 & 0 & 0 & 0 & y_{11} & y_{21} & y_{31} & y_{41} \\ x_{12} & x_{22} & x_{32} & x_{42} & 0 & 0 & 0 & 0 \\ 0 & 0 & 0 & 0 & y_{12} & y_{22} & y_{32} & y_{42} \\ x_{13} & x_{23} & x_{33} & x_{43} & 0 & 0 & 0 & 0 \\ 0 & 0 & 0 & 0 & y_{13} & y_{23} & y_{33} & y_{43} \\ x_{14} & x_{24} & x_{34} & x_{44} & 0 & 0 & 0 & 0 \\ 0 & 0 & 0 & 0 & y_{14} & y_{24} & y_{34} & y_{44} \end{bmatrix}$$

In Equation 13, PUSCH port-domain power boosting may be possible. When there is one PT-RS port, 6dB boosting is possible by PUSCH-domain power boosting. When there are two PT-RS ports, 9dB power boosting (6dB from PUSCH port domain + 3dB from PT-RS port domain) is possible.

When the number of PT-RS ports is set to 2, 3dB boosting is possible by borrowing power from the PT-RS domain as described above.

## 2. Proposal 2

Based on the above description of Proposal 1, the following power boosting for partial coherent is proposed. Referring to FIGS. 9(a) and 10, for an 8-Tx UE with partial coherent level 1, the number of PUSCH antenna ports within each coherent port group may be 4. Therefore, when the 8-Tx & partial coherent level 1 UE performs an 8-layer transmission, each coherent port group may be associated with 4 layers (Lx=4). For a transmission of 1 to 7 layers, mapping between layers and ports may be determined through a TPMI, and thus the number Lx of associated layers may be determined for each coherent port group.

Referring to FIG. 9(b), for an 8-Tx UE with partial coherent level 2, the number of PUSCH antenna ports within each coherent port group may be 2. Therefore, when the 8-Tx & partial coherent level 2 UE performs an 8-layer transmission, each coherent port group may be associated with 2 layers (Lx=2). For a transmission of 1 to 7 layers, mapping between layers and ports may be determined through a TPMI, and thus the number Lx of associated layers may be determined for each coherent port group.

## (1) Proposal 2-1

For partial coherent level 1, the following PT-RS power boosting is proposed.

1) When one PT-RS port (Qp=1) is configured and partial coherent level 1 is configured/indicated,

a. 0dB PT-RS power boosting is performed (i.e., no power boosting is performed).

   (i) The above operation may be configured/indicated as default.

b. Alternatively, when the layers of the coherent port groups are Lx1 and Lx2, respectively (transmission rank indicator (TRI) = Lx1 + Lx2),

   (i) When Lx1 = 0 or Lx2 = 0, PT-RS power boosting is 0dB.
   (ii) When Lx1, Lx2 > 0, PT-RS power boosting is 0dB + 10*log(min(Lx1, Lx2)) dB or 0dB + 10*log(max(Lx1, Lx2)) dB. Herein, 0dB may mean 10log(Qp=1).

   - Whether to use a min value or a max value may be determined based on a UE capability or configured by the BS.
   - When Lx1 = Lx2, PT-RS power boosting is 0dB + 10*log(Lx1) dB (=10*log(Lx2)) dB, where 0dB may mean 10log(Qp=1). Therefore, 3dB+10*log(Lx) dB may be expressed as 10log(Qp)+10*log(Lx) dB =10log(Qp*Lx) dB.

2) When two PT-RS ports (Qp=2) are configured and partial coherent level 1 with layer 2 or higher is indicated,

a. When the layers of the coherent port groups are Lx1 and Lx2, respectively (TRI = Lx1 + Lx2),

   (i) When Lx1 = Lx2, PT-RS power boosting is 3dB + 10*log(Lx1) dB, where 3dB may mean 10log(Qp=2). Therefore, 3dB+10*log(Lx1) dB may be expressed as 10log(Qp)+10*log(Lx1) dB =10log(Qp*Lx1) dB.
   (ii) When Lx1 = Lx2, PT-RS power boosting is 3dB + P dB, where 3dB may mean 10log(Qp=2).

   - The P value is 0 or 10*log(min(Lx1, Lx2)) dB or 10*log(max(Lx1, Lx2)) dB.
     Whether to use 0, the min value, or the max value may be determined based on the UE capability or configured by the BS.

b. When Lx1 = 0 or Lx2 = 0, setting the number of PT-RS ports to 2 may not be meaningful. In this case, the UE operates on the assumption that one PT-RS port is configured.

3) Alternatively, PT-RS power boosting may be performed based on the UE capability according to Proposal 1/1-1.

In the above proposal, the Qp value for partial coherent level 1 may be limited to 1 or 2. Alternatively, even if the Qp value greater than 2, such as 3 or 4, is set, the UE may operate with Qp=2. In Proposal 2-1, a limit value may also be set based on a BS configuration and/or a UE capability report as in Proposal 1-1, and in this case, the minimum value between the limit value and a value calculated based on Proposal 2-1 may be used for PT-RS power boosting.

Similarly, for partial coherent level 2, the following rank-1 codebook configuration is possible.

[Equation 14]

$$\begin{bmatrix} x_1 \\ 0 \\ 0 \\ 0 \\ x_2 \\ 0 \\ 0 \\ 0 \end{bmatrix}, \begin{bmatrix} 0 \\ y_1 \\ 0 \\ 0 \\ 0 \\ y_2 \\ 0 \\ 0 \end{bmatrix}, \begin{bmatrix} 0 \\ 0 \\ w_1 \\ 0 \\ 0 \\ 0 \\ w_2 \\ 0 \end{bmatrix}, \begin{bmatrix} 0 \\ 0 \\ 0 \\ z_1 \\ 0 \\ 0 \\ 0 \\ z_2 \end{bmatrix}$$

[Equation 15]

$$\begin{bmatrix} x_{11} & x_{21} \\ 0 & 0 \\ 0 & 0 \\ 0 & 0 \\ x_{12} & x_{22} \\ 0 & 0 \\ 0 & 0 \\ 0 & 0 \end{bmatrix}, \begin{bmatrix} x_{11} & 0 \\ 0 & y_{11} \\ 0 & 0 \\ 0 & 0 \\ x_{12} & 0 \\ 0 & y_{12} \\ 0 & 0 \\ 0 & 0 \end{bmatrix}$$

In Equation 15, for a 2-layer transmission, the number of PT-RS ports may be set to 1 for the left matrix. In this case, when power boosting is to be performed in the layer domain, power should be shared from PUSCH ports corresponding to 0, which increases UE implementation complexity and cost. On the other hand, two PT-RS ports may be configured for the right matrix, and in this case, 3dB boosting is possible by borrowing power from REs to which the PT-RS is mapped. Obviously, even in the case of the right matrix, power boosting is not possible when one PT-RS is configured.

[Equation 16]

$$\begin{bmatrix} x_{11} & x_{21} & 0 \\ 0 & 0 & 0 \\ 0 & 0 & w_{11} \\ 0 & 0 & 0 \\ x_{12} & x_{22} & 0 \\ 0 & 0 & 0 \\ 0 & 0 & w_{12} \\ 0 & 0 & 0 \end{bmatrix}, \begin{bmatrix} x_{11} & 0 & 0 \\ 0 & y_{11} & 0 \\ 0 & 0 & w_{11} \\ 0 & 0 & 0 \\ x_{12} & 0 & 0 \\ 0 & y_{12} & 0 \\ 0 & 0 & w_{12} \\ 0 & 0 & 0 \end{bmatrix}$$

In Equation 16, for a 3-layer transmission, when there is one PT-RS port, power boosting is not performed. For the left matrix in Equation 16, two PT-RS ports may be configured. In this case, when power boosting is to be performed, power should be shared from PUSCH ports corresponding to 0, which increases UE implementation complexity and cost. Only power boosting in the PT-RS port domain may be performed, and consequently, 3dB boosting is possible. On the other hand, when there is one PT-RS port for the right matrix, 0dB boosting is performed. When 2 or 3 PT-RS ports are configured, 3dB or 4.77dB boosting is possible by borrowing power from REs to which the PT-RS is mapped.

[Equation 17]

$$\begin{bmatrix} x_{11} & x_{21} & 0 & 0 \\ 0 & 0 & y_{11} & y_{21} \\ 0 & 0 & 0 & 0 \\ 0 & 0 & 0 & 0 \\ x_{12} & x_{22} & 0 & 0 \\ 0 & 0 & y_{12} & y_{22} \\ 0 & 0 & 0 & 0 \\ 0 & 0 & 0 & 0 \end{bmatrix}$$

[Equation 18]

$$\begin{bmatrix} x_{11} & x_{21} & 0 & 0 \\ 0 & 0 & y_{11} & 0 \\ 0 & 0 & 0 & w_{11} \\ 0 & 0 & 0 & 0 \\ x_{12} & x_{22} & 0 & 0 \\ 0 & 0 & y_{12} & 0 \\ 0 & 0 & 0 & w_{12} \\ 0 & 0 & 0 & 0 \end{bmatrix}$$

[Equation 19]

$$\begin{bmatrix} x_{11} & 0 & 0 & 0 \\ 0 & y_{11} & 0 & 0 \\ 0 & 0 & w_{11} & 0 \\ 0 & 0 & 0 & z_{11} \\ x_{12} & 0 & 0 & 0 \\ 0 & y_{12} & 0 & 0 \\ 0 & 0 & w_{12} & 0 \\ 0 & 0 & 0 & z_{12} \end{bmatrix}$$

In Equation 17, for a 4-layer transmission, when there is one PT-RS port, power boosting is not performed. Two PT-RS ports may be configured, and in this case, when power boosting is to be performed, power should be shared from PUSCH ports corresponding to 0, which increases UE implementation complexity and cost. Only power boosting in the PT-RS port domain may be performed, and consequently, 3dB boosting is possible.

In Equation 18, when there is one PT-RS port, 0dB boosting is performed. When 2 or 3 PT-RS ports are configured, 3dB or 4.77dB boosting is possible by borrowing power from REs to which the PT-RS is mapped.

In Equation 19, when there is one PT-RS port, 0dB boosting is performed. When 2, 3 or 4 PT-RS ports are configured, 3dB, 4.77dB or 6dB boosting is possible by borrowing power from REs to which the PT-RS is mapped.

[Equation 20]

$$\begin{bmatrix} x_{11} & x_{21} & 0 & 0 & 0 \\ 0 & 0 & y_{11} & y_{21} & 0 \\ 0 & 0 & 0 & 0 & w_{11} \\ 0 & 0 & 0 & 0 & 0 \\ x_{12} & x_{22} & 0 & 0 & 0 \\ 0 & 0 & y_{12} & y_{22} & 0 \\ 0 & 0 & 0 & 0 & w_{12} \\ 0 & 0 & 0 & 0 & 0 \end{bmatrix}$$

[Equation 21]

$$\begin{bmatrix} x_{11} & x_{21} & 0 & 0 & 0 \\ 0 & 0 & y_{11} & 0 & 0 \\ 0 & 0 & 0 & w_{11} & 0 \\ 0 & 0 & 0 & 0 & z_{11} \\ x_{12} & x_{22} & 0 & 0 & 0 \\ 0 & 0 & y_{12} & 0 & 0 \\ 0 & 0 & 0 & w_{12} & 0 \\ 0 & 0 & 0 & 0 & z_{12} \end{bmatrix}$$

In Equation 20, for a 5-layer transmission, when there is one PT-RS port, power boosting is not performed. When two PT-RS ports are configured, only power boosting in the PT-RS port domain may be performed, and consequently, 3dB boosting is possible. When three PT-RS ports are configured, only power boosting in the PT-RS port domain may be performed, and consequently, 4.77dB boosting is possible.

In Equation 21, when there is one PT-RS port, power boosting is not performed. When two PT-RS ports are configured, only power boosting in the PT-RS port domain may be performed, and consequently, 3dB boosting is possible. When three PT-RS ports are configured, only power boosting in the PT-RS port domain may be performed, and consequently, 4.77dB boosting is possible. When four PT-RS ports are configured, only power boosting in the PT-RS port domain may be performed, and consequently, 6dB boosting is possible.

[Equation 22]

$$\begin{bmatrix} x_{11} & x_{21} & 0 & 0 & 0 & 0 \\ 0 & 0 & y_{11} & y_{21} & 0 & 0 \\ 0 & 0 & 0 & 0 & w_{11} & w_{21} \\ 0 & 0 & 0 & 0 & 0 & 0 \\ x_{12} & x_{22} & 0 & 0 & 0 & 0 \\ 0 & 0 & y_{12} & y_{22} & 0 & 0 \\ 0 & 0 & 0 & 0 & w_{12} & w_{22} \\ 0 & 0 & 0 & 0 & 0 & 0 \end{bmatrix}$$

[Equation 23]

$$\begin{bmatrix} x_{11} & x_{21} & 0 & 0 & 0 & 0 \\ 0 & 0 & y_{11} & y_{21} & 0 & 0 \\ 0 & 0 & 0 & 0 & w_{11} & 0 \\ 0 & 0 & 0 & 0 & 0 & z_{11} \\ x_{12} & x_{22} & 0 & 0 & 0 & 0 \\ 0 & 0 & y_{12} & y_{22} & 0 & 0 \\ 0 & 0 & 0 & 0 & w_{12} & 0 \\ 0 & 0 & 0 & 0 & 0 & z_{12} \end{bmatrix}$$

In Equation 22, for a 6-layer transmission, when there is one PT-RS port, power boosting is not performed. When two PT-RS ports are configured, only power boosting in the PT-RS port domain may be performed, and consequently, 3dB boosting is possible. When three PT-RS ports are configured, only power boosting in the PT-RS port domain may be performed, and consequently, 4.77dB boosting is possible.

In Equation 23, when there is one PT-RS port, power boosting is not performed. When two PT-RS ports are configured, only power boosting in the PT-RS port domain may be performed, and consequently, 3dB boosting is possible. When three PT-RS ports are configured, only power boosting in the PT-RS port domain may be performed, and consequently, 4.77dB boosting is possible. When four PT-RS ports are configured, only power boosting in the PT-RS port domain may be performed, and consequently, 6dB boosting is possible.

[Equation 24]

$$\begin{bmatrix} x_{11} & x_{21} & 0 & 0 & 0 & 0 & 0 \\ 0 & 0 & y_{11} & y_{21} & 0 & 0 & 0 \\ 0 & 0 & 0 & 0 & w_{11} & w_{21} & 0 \\ 0 & 0 & 0 & 0 & 0 & 0 & z_{11} \\ x_{12} & x_{22} & y_{12} & y_{22} & 0 & 0 & 0 \\ 0 & 0 & 0 & 0 & 0 & 0 & 0 \\ 0 & 0 & 0 & 0 & w_{12} & w_{22} & 0 \\ 0 & 0 & 0 & 0 & 0 & 0 & z_{12} \end{bmatrix}$$

In Equation 24, when there is one PT-RS port, power boosting is not performed. When two PT-RS ports are configured, only power boosting in the PT-RS port domain may be performed, and consequently, 3dB boosting is possible. When three PT-RS ports are configured, only power boosting in the PT-RS port domain may be performed, and consequently, 4.77dB boosting is possible. When four PT-RS ports are configured, only power boosting in the PT-RS port domain may be performed, and consequently, 6dB boosting is possible.

[Equation 25]

$$\begin{bmatrix} x_{11} & x_{21} & 0 & 0 & 0 & 0 & 0 & 0 \\ 0 & 0 & y_{11} & y_{21} & 0 & 0 & 0 & 0 \\ 0 & 0 & 0 & 0 & w_{11} & w_{21} & 0 & 0 \\ 0 & 0 & 0 & 0 & 0 & 0 & z_{11} & z_{21} \\ x_{12} & x_{22} & y_{12} & y_{22} & 0 & 0 & 0 & 0 \\ 0 & 0 & 0 & 0 & 0 & 0 & 0 & 0 \\ 0 & 0 & 0 & 0 & w_{12} & w_{22} & 0 & 0 \\ 0 & 0 & 0 & 0 & 0 & 0 & z_{12} & z_{22} \end{bmatrix}$$

In Equation 25, when there is one PT-RS port, power boosting is possible by borrowing power from PUSCH ports, and this value is 3dB. When two PT-RS ports are configured, 3+3 = 6dB power boosting is possible due to power boosting in the PT-RS port domain and PUSCH port power boosting. When three PT-RS ports are configured, 4.77+3 = 7.77dB power boosting is possible due to power boosting in the PT-RS port domain and PUSCH port power boosting. When four PT-RS ports are configured, 6+3 = 9dB power boosting is possible due to power boosting in the PT-RS port domain and PUSCH port power boosting.

**(2) Proposal 2-2**

Based on the above descriptions of Proposal 1 and Proposal 2-1, the following power boosting for partial coherent level 2 is proposed.

1) When the number of PT-RS ports is set to 1 and partial coherent level 2 is indicated,

    a. For TRI = 1 to 7, 0dB PT-RS power boosting is performed (i.e., no power boosting is performed).
    b. For TRI = 8, 3dB PT-RS power boosting is performed.

2) When the number of PT-RS ports is set to 2 and partial coherent level 2 is indicated,

    a. For TRI = 2 to 7, 3dB PT-RS power boosting is performed (i.e., no power boosting is performed).
    b. For TRI = 8, 6dB PT-RS power boosting is performed.

3) When the number of PT-RSs is set to 3 and partial coherent level 2 is indicated,

    a. For TRI = 3 to 7, 4.77dB PT-RS power boosting is performed (i.e., no power boosting is performed).
    b. For TRI = 8, 7.77dB PT-RS power boosting is performed.

4) When the number of PT-RS ports is set to 4 and partial coherent level 2 is indicated,

    a. For TRI = 4 to 7, 6dB PT-RS power boosting is performed (i.e., no power boosting is performed).
    b. For TRI = 8, 9dB PT-RS power boosting is performed.

Table 9 is an example of power boosting for partial coherent level 2.

[Table 9]

| Factor related to PUSCH to PT-RS power ratio per layer per RE $\alpha^{PUSCH}_{PTRS}$ | | | | | | | | |
|---|---|---|---|---|---|---|---|---|
| The number of PUSCH layers ( $n^{PUSCH}_{layer}$ ) | 1 | 2 | 3 | 4 | 5 | 6 | 7 | 8 |

(continued)

| Factor related to PUSCH to PT-RS power ratio per layer per RE $\alpha_{PTRS}^{PUSCH}$ | | | |
|---|---|---|---|
| UL-PTRS-power/ $\alpha_{PTRS}^{PUSCH}$ | 0 | 10*log(Qp) | 3+ 10*log(Qp) |

In Proposal 2-2, a limit value may also be set based on a BS configuration and/or a UE capability report as in Proposal 1-1. For example, the minimum value between the limit value and a value calculated based on Proposal 2-2 may be used for PT-RS power boosting.

### 3. Proposal 3

For non-coherent or non-codebook-based UL, since port sharing may be difficult, power boosting based on the number of PT-RS ports (Qp) is performed.

[Table 10]

| Factor related to PUSCH to PT-RS power ratio per layer per RE $\alpha_{PTRS}^{PUSCH}$ | | | | | | | | |
|---|---|---|---|---|---|---|---|---|
| The number of PUSCH layers ( $n_{layer}^{PUSCH}$ ) | 1 | 2 | 3 | 4 | 5 | 6 | 7 | 8 |
| $UL\text{-}PTRS\text{-}power / \alpha_{PTRS}^{PUSCH}$ | 0 | 10*log(Qp) | | | | | | |

In Proposal 3, similar to the example of Proposal 2-2 where each layer of a specific TRI is configured with a TPMI corresponding to a different coherent port group, power boosting may not be performed in the PUSCH port domain, and only power sharing is possible from REs to which the PT-RS is mapped. In the above proposal, the Qp value may be set to 1, 2, 3, or 4, and this value is set for the UE by the BS.

In Proposal 3, a limit value may also be set based on a BS configuration and/or a UE capability report as in Proposal 1-1. For example, the minimum value between the limit value and a value calculated based on Proposal 3 may be used for PT-RS power boosting.

When there are two PT-RSs, it is ambiguous how the PT-RSs are allocated for partial coherency level 1 (Ng=2) and level 2 (Ng=4).

Table 11 illustrates a recent standardization agreement.

[Table 11]

| For codebook design of an 8TX partial-coherent UE, configured with an 8-port SRS resource |
|---|
| • For when Ng=2, down-select of the following convention for assumption of port coherency scheme is used |
| ○ Alt 1: two coherent groups of {0,2,4,6} and {1,3,5,7} |
| ○ Alt 2: two coherent groups of {0,1,4,5} and {2,3,6,7} |
| ○ Alt 3: two coherent groups of {0,1,2,3} and {4,5,6,7} |
| • For when Ng=4, down-select of the following convention for assumption of port coherency scheme is used |
| ○ Alt 1: four coherent groups of {0,4}, {1,5}, {2,6}, and {3,7} |
| ○ Alt 2: four coherent groups of {0,1}, {2,3}, {4,5}, and {6,7} |
| ○ Alt3: four coherent groups of {0, 2}, {4, 6}, {1, 3} and {5, 7} |
| • Note: Other alternatives which are not foreseen are not precluded |

Referring to the agreement in Table 11, port indexing for coherent antenna groups may be determined in one of the above methods. For convenience of description, PUSCH antenna port groups (APGs) are reorganized using the above agreement.

1) Ng = 2,

- Alt 1: APG1 = {1000, 1002, 1004, 1006}, APG2 = {1001, 1003, 1005, 1007},
- Alt 2: APG1 = {1000, 1002, 1004, 1005}, APG2 = {1002, 1003, 1006, 1007},
- Alt 3: APG1 = {1000, 1001, 1002, 1003}, APG2 = {1004, 1005, 1006, 1007},

2) Ng = 4,

- Alt 1: APG1 = {1000, 1004} APG2 = {1001, 1005}, APG3 = {1002, 1006}, APG4 = {1003, 1007}
- Alt 2: APG1 = {1000, 1001} APG2 = {1002, 1003}, APG3 = {1004, 1005}, APG4 = {1006, 1007}
- Alt 3: APG1 = {1000, 1002} APG2 = {1004, 1006}, APG3 = {1001, 1003}, APG4 = {1005, 1007}

For convenience of description, hereinafter, for Ng=2, Alt2 is used as a reference, and for Ng=4, Alt1 is used as a reference.

## (A) Proposal A

For a partial coherent UE with Ng = 2, when the number of PTRS ports is set to 2, each antenna port group shares one PTRS port. For example, PUSCH ports within APG1 indicated by a TPMI share PTRS port 0, and PUSCH ports within APG2 share PTRS port 1.

A PT-RS is designed for phase tracking, and one PT-RS port is preferably configured for each antenna group (e.g., antenna panel) that shares the same oscillator. Therefore, for Ng=2, it is preferable to set one PT-RS per antenna port group.

## (B) Proposal B

For Ng=4, there are four coherency antenna groups, and thus it may be ambiguous how a PTRS is mapped to them (especially when the number of PT-RS ports is 2). Accordingly, the following is proposed.

For a partial coherent UE with Ng = 4, when the number of PTRS ports is set to 2, two antenna port groups share one PTRS port. Mapping between APGs 1, 2, 3, and 4 and PTRS ports 0 and 1 may be pre-agreed or configured by the BS. For example, it may be pre-agreed or configured by the BS that PUSCH ports within APG1 and APG2 indicated by a TPMI share PTRS port 0, and PUSCH ports within APG3 and APG4 indicated by a TPMI share PTRS port 1.

In Proposal B, the mapping between APGs 1, 2, 3, and 4 and PT-RS ports 0 and 1 is an example of aligning between Ng=2 and Ng=4. This advantageously allows support/use of a partial coherent codebook subset corresponding to Ng=4 for a UE with Ng=2, which may be configured by the BS. That is, since the UE has a higher coherency capability, there is no performance degradation even if the UE uses a partial coherent codebook corresponding to Ng=4. Therefore, even if the UE with Ng=2 is configured with a partial coherent codebook subset corresponding to Ng=4, a design of mapping the same PT-RS may be advantageous for the convenience of UE implementation.

Alternatively, for more flexible mapping between APGs and PT-RS ports, the BS may configure/indicate a mapping relationship between APGs and PT-RS ports using an RRC/MAC-CE/DCI. For example, the BS may configure a plurality of mapping relationships and indicate one of the mapping relationships to the UE.

Depending on a BS configuration, the UE may perform mapping between APGs and PT-RS ports through implementation such as port switching/re-indexing, which may cause additional UE complexity. Therefore, when the UE reports the mapping relationship or information about PUSCH port groups that may share a PT-RS as a UE capability, the BS may receive PT-RS 0 and PT-RS 1 based on the report. When the UE reports {APG1, PT-RS0} and {APG2, APG3, APG4, PT-RS 1} as an example of the UE capability, the BS may understand that PUSCH ports within APG1 indicated by the TPMI share PTRS port 0, and PUSCH ports within APG2, APG3, and APG4 indicated by the TPMI share PTRS port 1, and receive the PT-RS. Although the above capability is represented as APGs, for convenience of description, it may also be reported as PUSCH ports. In the above example, {1000, 1004, PT-RS0} may be reported instead of {APG1, PT-RS0}.

When there are four PT-RS ports, each APG may correspond to one PT-RS. For example, PUSCH ports within APG1 indicated by a TPMI share PTRS port 0, PUSCH ports within APG2 share PTRS port 1, PUSCH ports within APG3 indicated by the TPMI share PTRS port 2, and PUSCH ports within APG4 share PTRS port 3.

Proposals 1, 1-1, 2-1, 2-2, 3, A, and B may be used alone or in combination.

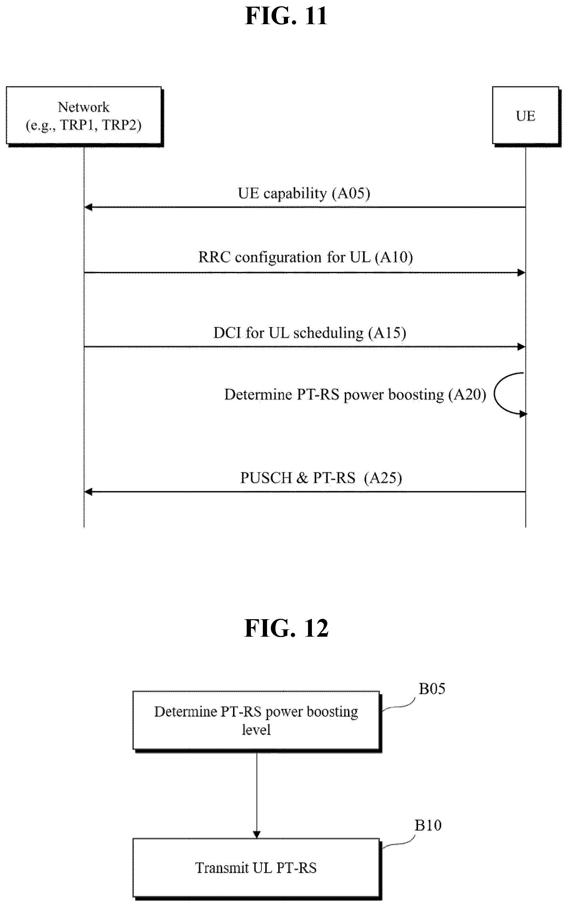

FIG. 11 illustrates an example of operations of a network and a UE according to an embodiment. In FIG. 11, the network may include one or more transmission and reception points (TRPs). Although an example of single DCI-based S/M-TRP transmission is shown, the method described in FIG. 11 may also be extended to multiple DCI-based M-TRP transmission.

Although signaling between two TRPs and a UE is illustrated for convenience, this signaling method may also be applied to signaling between multiple TRPs and multiple UEs. In the following description, the network side may be one BS or one cell including one or more TRPs. For example, an ideal/non-ideal backhaul may be configured between TRP 1 and TRP 2.

A BS may generally refer to an object that performs data transmission and reception with a UE. For example, the BS may be a concept including one or more transmission points (TPs), one or more TRPs, and so on. Further, a TP and/or a TRP may include a panel, a transmission and reception unit, and so on of the BS.

"TRP" may be replaced with terms such as panel, antenna array, cell (e.g., macro cell/small cell/ pico cell), TP, or BS (gNB and so on). In addition, a TRP may be identified by information (e.g., index or ID) about a CORESET group (or CORESET pool), as described above. For example, when a UE is configured to perform transmission and reception with multiple TRPs (or cells), this may mean that multiple CORESET groups (or CORESET pools) are configured for the UE. These CORESET groups (or CORESET pools) may be configured by higher layer signaling (e.g., RRC signaling or the like).

Referring to FIG. 11, the UE may transmit a UE capability report to the network (A05). For example, the UE capability may include information such as whether the UE supports the above-described proposed methods (e.g., Proposal 1/Proposal 2/Proposal 3)/a UE capability related to a supported operation. For example, the UE may include at least one of information about whether 8-Tx UL transmission is supported, whether an 8-Tx antenna configuration is full-coherent, non-coherent or partial-coherent, and information about coherent antenna groups, if it is partial coherent.

For example, the UE capability may include the number of supported antenna ports/number of ports per panel/number of concurrently transmittable panels/coherency capability (e.g., nonCoherent, partialNonCoherent, or fullCoherent)/full power transmission capability/supported full Tx mode/supported TPMI group/port switching capability/TX chain-related information/support for M-TRP transmission/number of transmittable SRS resources/multiplexing information (e.g., TDM/FDM/SDM), and so on. When the UE capability information is predefined/pre-agreed, this step may be omitted.

The UE may receive an RRC configuration for UL from the network (A10). The RRC configuration for UL may be determined based on the UE capability. The RRC configuration for UL may include a PTRS-related configuration and a PUSCH-related configuration.

The network may transmit DCI for scheduling an 8-Tx PUSCH (A15). The DCI may be transmitted through a control channel (e.g., PDCCH). For example, the DCI may include PUSCH resource information and precoding-related information. For example, the precoding-related information may include information about an SRI/TPMI/TRI/MCS. For example, the DCI may be DCI format 0-1 or DCI format 0-0.

For example, the TRI/TPMI/SRI may be indicated/configured as described in the above-described proposed methods (e.g., Proposal 1/Proposal 2/Proposal 3, etc.), in consideration of transmission/reception through a plurality of panels/ports. For example, a TRI for one of a plurality of TRPs (e.g., a first TRP (which may be determined based on an index such as CoresetID/TCI state)) may be indicated, and it may be assumed that the other TRPs apply the same TRP value. For example, a TRI to be applied commonly/individually for each TRP may be indicated through a higher layer configuration, and a TPMI may be indicated through DCI. For example, in consideration of channel environments, the rank of a TRP in the best channel environment may be used as a reference, and the ranks of the other TRPs may be set to values less than the reference rank or to predefined values. For example, a TPMI may be indicated for a specific rank combination. For example, the field size of the TPMI may be determined based on the largest of the numbers of TPMIs for the respective ranks. For example, a rank for one of a plurality of TRPs (e.g., a first TRP (which may be determined based on an index such as CoresetID/TCI state)) may be indicated, rank indications for the other TRPs may be omitted, and an SRS resource combination for a transmission with the rank may be indicated.

The UE may determine a PTRS power boosting level to be transmitted together with a PUSCH based on at least one of the above-described proposals (A20).

The UE may transmit the PUSCH and a PTRS (A25).

FIG. 12 illustrates an implementation example of an operation of a UE in a wireless communication system according to an embodiment.

Referring to FIG. 12, the UE may determine a power boosting level of an uplink phase tracking-reference signal (UL PT-RS) related to a physical uplink shared channel (PUSCH) transmission based on eight transmission (Tx) antennas (B05).

The UE may transmit the UL PT-RS based on the determined power boosting level (B10).

The power boosting level of the UL PT-RS may be determined based on whether the PUSCH transmission based on the eight Tx antennas is a full coherent codebook-based transmission, a partial coherent codebook-based transmission, or a non-coherent codebook-based transmission.

The power boosting level for the full coherent codebook-based transmission may be determined based on $10\log_{10}(X)$, where X may be the number of PUSCH layers.

The power boosting level for the non-coherent codebook-based transmission may be determined based on $10\log_{10}(Y)$, where Y may be the number of antenna ports of the UL PT-RS.

The power boosting level for the partial-coherent codebook-based transmission may be determined based on $10\log_{10}(Y*Z)$, where Z may be the number of PUSCH layers related to each coherent antenna group.

The number Y of antenna ports of the UL PT-RS may be set to 1 or 2.

Based on the PUSCH transmission being the full coherent codebook-based transmission, the power boosting level may be determined regardless of the number B of antenna ports of the UL PT-RS.

The power boosting level for the full coherent codebook-based transmission may be determined based on Table 7.

Z may be the number of PUSCH layers related to a coherent antenna group determined through a transmission precoding matrix index (TPMI).

The number of coherent antenna groups related to the partial-coherent codebook-based transmission may be 2 or 4. Based on the number of coherent antenna groups related to the partial-coherent codebook-based transmission being 2, Z may have a value of 4 or less.

Based on the number of coherent antenna groups related to the partial-coherent codebook-based transmission being 4, Z may have a value of 2 or less.

Based on the number of coherent antenna groups related to the partial-coherent codebook-based transmission being 4 and the number Y of antenna ports of the UL PT-RS being 2, one UL PT-RS antenna port may be shared per two coherent antenna groups.

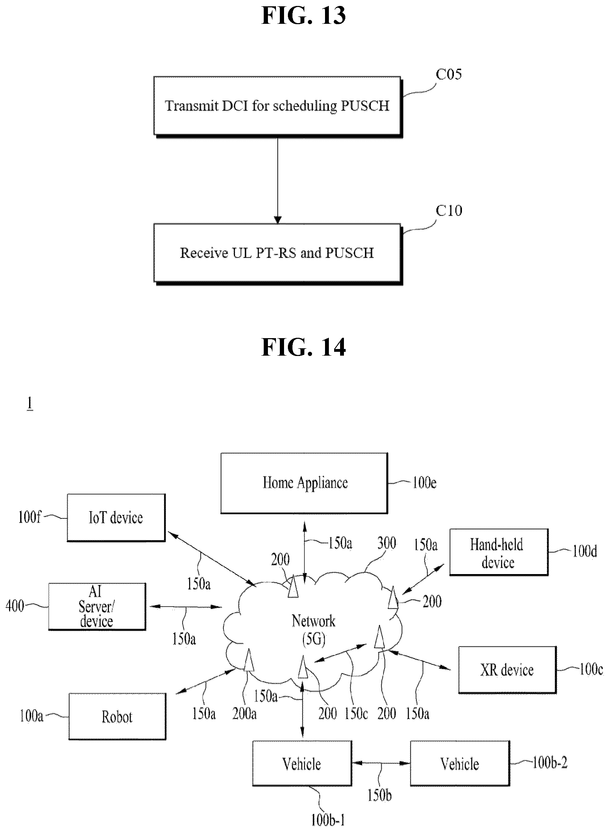

FIG. 13 illustrates an implementation example of an operation of a BS in a wireless communication system according to an embodiment.

Referring to FIG. 13, the BS may transmit downlink control information (DCI) for scheduling a PUSCH transmission based on eight Tx antennas of a UE (C05).

The BS may receive a PUSCH and a UL PT-RS related to the PUSCH transmission based on the DCI (C10).

A power boosting level of the UL PT-RS may be determined based on whether the PUSCH transmission based on the eight Tx antennas is a full coherent codebook-based transmission, a partial coherent codebook-based transmission, or a non-coherent codebook-based transmission.

The power boosting level for the full coherent codebook-based transmission may be determined based on $10\log_{10}(X)$, where X may be the number of PUSCH layers.

The power boosting level for the non-coherent codebook-based transmission may be determined based on $10\log_{10}(Y)$, where Y may be the number of antenna ports of the UL PT-RS.

The power boosting level for the partial-coherent codebook-based transmission may be determined based on $10\log_{10}(Y*Z)$, where Z may be the number of PUSCH layers related to each coherent antenna group.

The number Y of antenna ports of the UL PT-RS may be set to 1 or 2.

Based on the PUSCH transmission being the full coherent codebook-based transmission, the power boosting level may be determined regardless of the number B of antenna ports of the UL PT-RS.

The power boosting level for the full coherent codebook-based transmission may be determined based on Table 7.

Z may be the number of PUSCH layers related to a coherent antenna group determined through a TPMI.

The number of coherent antenna groups related to the partial-coherent codebook-based transmission may be 2 or 4. Based on the number of coherent antenna groups related to the partial-coherent codebook-based transmission being 2, Z may have a value of 4 or less.

Based on the number of coherent antenna groups related to the partial-coherent codebook-based transmission being 4, Z may have a value of 2 or less.

Based on the number of coherent antenna groups related to the partial-coherent codebook-based transmission being 4 and the number Y of antenna ports of the UL PT-RS being 2, one UL PT-RS antenna port may be shared per two coherent antenna groups.

FIG. 14 illustrates a communication system 1 applied to the disclosure.

Referring to FIG. 14, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the disclosure.

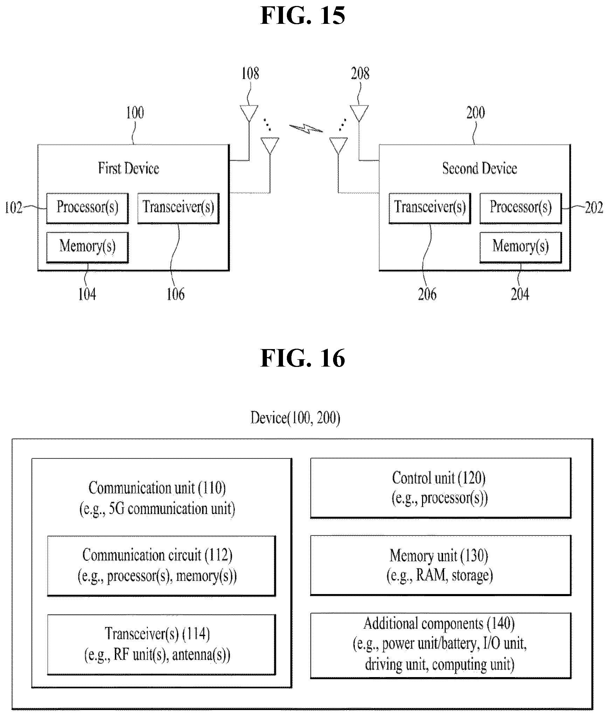

FIG. 15 illustrates wireless devices applicable to the disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 16 illustrates another example of a wireless device applied to the disclosure. The wireless device may be implemented in various forms according to a use-case/service (refer to FIG. 14).

Referring to FIG. 16, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

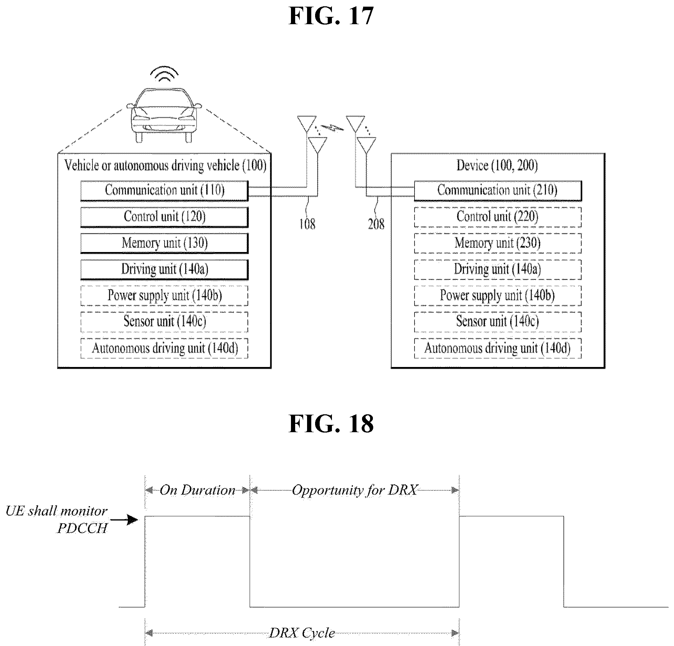

FIG. 17 illustrates a vehicle or an autonomous driving vehicle applied to the disclosure. The vehicle or autonomous driving vehicle may be implemented by a mobile robot, a car, a train, a manned/unmanned Aerial Vehicle (AV), a ship, etc.

Referring to FIG. 17, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

FIG. 18 is a diagram illustrating a DRX operation of a UE according to an embodiment of the disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 18, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the aforedescribed/proposed procedures and/or methods. For example, when DRX is configured, PDCCH reception occasions (e.g., slots with PDCCH SSs) may be configured discontinuously according to a DRX configuration in the disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the disclosure. Irrespective of whether DRX is configured, PDCCH monitoring may be restricted during a time period configured as a measurement gap.

DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

The above-described embodiments correspond to combinations of elements and features of the disclosure in prescribed forms. And, the respective elements or features may be considered as selective unless they are explicitly mentioned. Each of the elements or features can be implemented in a form failing to be combined with other elements or features. Moreover, it is able to implement an embodiment of the disclosure by combining elements and/or features together in part. A sequence of operations explained for each embodiment of the disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The disclosure is applicable to UEs, BSs, or other apparatuses in a wireless mobile communication system.

**Claims**

1. A method of transmitting a signal by a user equipment (UE) in a wireless communication system, the method comprising:

   determining a power boosting level of an uplink phase tracking-reference signal (UL PT-RS) related to a physical uplink shared channel (PUSCH) transmission based on eight transmission (Tx) antennas; and
   transmitting the UL PT-RS based on the determined power boosting level,
   wherein the power boosting level is determined based on whether the PUSCH transmission based on the eight Tx antennas is a full coherent codebook-based transmission, a partial coherent codebook-based transmission, or a non-coherent codebook-based transmission,
   wherein the power boosting level for the full coherent codebook-based transmission is determined based on

$10\log_{10}(X)$, where X is a number of PUSCH layers,

wherein the power boosting level for the non-coherent codebook-based transmission is determined based on $10\log_{10}(Y)$, where Y is a number of antenna ports of the UL PT-RS, and

wherein the power boosting level for the partial coherent codebook-based transmission is determined based on $10\log_{10}(Y*Z)$, where Z is a number of PUSCH layers related to each coherent antenna group.

2.  The method of claim 1, wherein the number Y of the antenna ports of the UL PT-RS is set to 1 or 2.

3.  The method of claim 1, wherein based on the PUSCH transmission being the full coherent codebook-based transmission, the power boosting level is determined regardless of the number B of antenna ports of the UL PT-RS.

4.  The method of claim 1, wherein the power boosting level for the full coherent codebook-based transmission is determined based on Table A,

[Table A]

| X | 1 | 2 | 3 | 4 | 5 | 6 | 7 | 8 |
|---|---|---|---|---|---|---|---|---|
| =10log10(X) | 0 | 3.0 | 4.77 | 6.0 | 7.0 | 7.77 | 8.45 | 9 |

5.  The method of claim 1, wherein Z is the number of PUSCH layers related to a coherent antenna group determined through a transmission precoding matrix index (TPMI).

6.  The method of claim 1, wherein a number of coherent antenna groups related to the partial coherent codebook-based transmission is 2 or 4.

7.  The method of claim 6, wherein based on the number of coherent antenna groups related to the partial coherent codebook-based transmission being 2, Z has a value of 4 or less.

8.  The method of claim 6, wherein based on the number of coherent antenna groups related to the partial coherent codebook-based transmission being 4, Z has a value of 2 or less.

9.  The method of claim 6, wherein based on the number of coherent antenna groups related to the partial coherent codebook-based transmission being 4 and the number Y of antenna ports of the UL PT-RS being 2, one UL PT-RS antenna port is shared per two coherent antenna groups.

10. A computer-readable recording medium having a program recorded thereon for performing the method of claim 1.

11. An apparatus for wireless communication, the apparatus comprising:

a memory configured to store instructions; and
a processor configured to perform operations by executing the instructions,
wherein the operations of the processor include:

determining a power boosting level of an uplink phase tracking-reference signal (UL PT-RS) related to a physical uplink shared channel (PUSCH) transmission based on eight transmission (Tx) antennas; and
transmitting the UL PT-RS based on the determined power boosting level,
wherein the power boosting level is determined based on whether the PUSCH transmission based on the eight Tx antennas is a full coherent codebook-based transmission, a partial coherent codebook-based transmission, or a non-coherent codebook-based transmission,
wherein the power boosting level for the full coherent codebook-based transmission is determined based on $10\log_{10}(X)$, where X is a number of PUSCH layers,
wherein the power boosting level for the non-coherent codebook-based transmission is determined based on $10\log_{10}(Y)$, where Y is a number of antenna ports of the UL PT-RS, and
wherein the power boosting level for the partial coherent codebook-based transmission is determined based on $10\log_{10}(Y*Z)$, where Z is a number of PUSCH layers related to each coherent antenna group.

12. The apparatus of claim 11, further comprising a transceiver,

wherein the apparatus is a user equipment (UE) operating in a wireless communication system.

13. The apparatus of claim 11, wherein the apparatus is a processing device configured to control a user equipment (UE) operating in a wireless communication system.

14. A method of receiving a signal by a base station (BS) in a wireless communication system, the method comprising:

transmitting downlink control information (DCI) for scheduling a physical uplink shared channel (PUSCH) transmission based on eight transmission (Tx) antennas of a user equipment (UE); and

receiving an uplink phase tracking-reference signal (UL PT-RS) related to the PUSCH transmission,

wherein a power boosting level of the UL PT-RS is determined based on whether the PUSCH transmission based on the eight Tx antennas is a full coherent codebook-based transmission, a partial coherent codebook-based transmission, or a non-coherent codebook-based transmission,

wherein the power boosting level for the full coherent codebook-based transmission is determined based on $10\log_{10}(X)$, where X is a number of PUSCH layers,

wherein the power boosting level for the non-coherent codebook-based transmission is determined based on $10\log_{10}(Y)$, where Y is a number of antenna ports of the UL PT-RS, and

wherein the power boosting level for the partial coherent codebook-based transmission is determined based on $10\log_{10}(Y*Z)$, where Z is a number of PUSCH layers related to each coherent antenna group.

15. A base station (BS) for wireless communication, the BS comprising:

a memory configured to store instructions; and

a processor configured to perform operations by executing the instructions,

wherein the operations of the processor include:

transmitting downlink control information (DCI) for scheduling a physical uplink shared channel (PUSCH) transmission based on eight transmission (Tx) antennas of a user equipment (UE); and

receiving an uplink phase tracking-reference signal (UL PT-RS) related to the PUSCH transmission,

wherein a power boosting level of the UL PT-RS is determined based on whether the PUSCH transmission based on the eight Tx antennas is a full coherent codebook-based transmission, a partial coherent codebook-based transmission, or a non-coherent codebook-based transmission,

wherein the power boosting level for the full coherent codebook-based transmission is determined based on $10\log_{10}(X)$, where X is a number of PUSCH layers,

wherein the power boosting level for the non-coherent codebook-based transmission is determined based on $10\log_{10}(Y)$, where Y is a number of antenna ports of the UL PT-RS, and

wherein the power boosting level for the partial coherent codebook-based transmission is determined based on $10\log_{10}(Y*Z)$, where Z is a number of PUSCH layers related to each coherent antenna group.

# FIG. 1

| Initial Cell Search | System Information Reception | Random Access Procedure | General DL/UL Tx/Rx |

S101   S102   S103   S104   S105   S106   S107   • DL/UL ACK/NACK
• UE CQI/PMI/Rank Report using PUSCH and PUCCH

# FIG. 2

# FIG. 3

# FIG. 4

Long PUCCH

PDCCH

Gap

PDSCH/PUSCH

Short PUCCH

Long PUCCH

One slot

f

t

# FIG. 5

DL assingment-to-PDSCH offset (K0)

PDCCH

PDSCH

PUCCH

slot

PDSCH-to-HARQ-ACK reporting offset (K1)

# FIG. 6

UL grant-to-PUSCH offset (K2)

PDCCH

PUSCH

# FIG. 7

UE

BS

Configuration Information related to CSI (710)

RS(e.g., CSI-RS) (720)

Calculate CSI (730)

Report CSI (740)

# FIG. 8

TRP 1

Layer Group #1
for CW#1

TRP 2

Layer Group #1
for CW#2

UE 1

**(a)**

TRP 1

Layer Group #1
for CW#1

TRP 2

Layer Group #2
for CW#2

UE 1

**(b)**

# FIG. 9

(a) Level 1 Partial Conherent (Ng=2)

(b) Level 2 Partial Conherent (Ng=4)

# FIG. 10

Level 1 Partial Coherent (Ng=2)

# FIG. 11

# FIG. 12

# FIG. 13

Transmit DCI for scheduling PUSCH — C05

Receive UL PT-RS and PUSCH — C10

# FIG. 14

1

100f — IoT device

Home Appliance — 100e

100d — Hand-held device

400 — AI Server/device

Network (5G)

100c — XR device

100a — Robot

Vehicle — 100b-1

Vehicle — 100b-2

150a   300   150a   200   150a   150a   200   150a   200a   200   150c   200   150a   150b

# FIG. 15

108    208

100    200

First Device                    Second Device

102 — Processor(s)   Transceiver(s)    Transceiver(s)   Processor(s) — 202

Memory(s)                         Memory(s)

104        106              206        204

# FIG. 16

Device(100, 200)

Communication unit (110)
(e.g., 5G communication unit)

Control unit (120)
(e.g., processor(s))

Communication circuit (112)
(e.g., processor(s), memory(s))

Memory unit (130)
(e.g., RAM, storage)

Transceiver(s) (114)
(e.g., RF unit(s), antenna(s))

Additional components (140)
(e.g., power unit/battery, I/O unit,
driving unit, computing unit)

# FIG. 17

# FIG. 18

## INTERNATIONAL SEARCH REPORT

| International application No. |
|---|
| **PCT/KR2024/001376** |

### A.    CLASSIFICATION OF SUBJECT MATTER

**H04W 52/14**(2009.01)i; **H04W 52/28**(2009.01)i; **H04W 52/32**(2009.01)i; **H04W 52/42**(2009.01)i; **H04W 8/24**(2009.01)i; **H04B 7/0404**(2017.01)i; **H04B 7/0426**(2017.01)i; **H04L 5/00**(2006.01)i; **H04W 52/36**(2009.01)i

According to International Patent Classification (IPC) or to both national classification and IPC

### B.    FIELDS SEARCHED

Minimum documentation searched (classification system followed by classification symbols)

H04W 52/14(2009.01); H04L 5/00(2006.01); H04W 52/32(2009.01); H04W 52/36(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: UL PT-RS(uplink phase tracking-reference signal), 전력 부스팅 레벨(power boosting level), 8개 송신 안테나(eight transmission antenna), 코히어런트 코드북(coherent codebook), 레이어(layer)

### C.    DOCUMENTS CONSIDERED TO BE RELEVANT

| Category* | Citation of document, with indication, where appropriate, of the relevant passages | Relevant to claim No. |
|---|---|---|
| Y | US 2020-0195404 A1 (LG ELECTRONICS INC.) 18 June 2020 (2020-06-18)<br>See paragraphs [0154], [0183], [0224]-[0226], [0239]-[0240] and [0248]-[0251]; table 13; and claims 1 and 10-11. | 1-15 |
| Y | LENOVO. Discussion of increased number of orthogonal DMRS ports. R1-2211293, 3GPP TSG RAN WG1 #111. Toulouse, France. 07 November 2022.<br>See section 2.2. | 1-15 |
| Y | OPPO. DMRS enhancement for Rel-18 MIMO. R1-2211428, 3GPP TSG RAN WG1 #111. Toulouse, France. 07 November 2022.<br>See section 2.2. | 2,5-9 |
| Y | US 2021-0410073 A1 (HUAWEI TECHNOLOGIES CO., LTD.) 30 December 2021 (2021-12-30)<br>See paragraphs [0084] and [0087]; and table 1. | 4 |
| A | QUALCOMM INCORPORATED. Design for increased number of orthogonal DMRS ports. R1-2212102, 3GPP TSG RAN WG1 #111. Toulouse, France. 05 November 2022.<br>See section 6. | 1-15 |

☐ Further documents are listed in the continuation of Box C.     ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **09 May 2024** | **09 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

International application No.

**PCT/KR2024/001376**

| Patent document cited in search report | | | Publication date (day/month/year) | Patent family member(s) | | | Publication date (day/month/year) |
|---|---|---|---|---|---|---|---|
| US | 2020-0195404 | A1 | 18 June 2020 | AU | 2018-298510 | A1 | 27 June 2019 |
| | | | | AU | 2018-298510 | B2 | 16 April 2020 |
| | | | | BR | 112019007429 | A2 | 15 October 2019 |
| | | | | BR | 112019007429 | B1 | 02 June 2020 |
| | | | | CA | 3030799 | A1 | 07 June 2020 |
| | | | | CA | 3030799 | C | 01 June 2021 |
| | | | | CL | 2019000066 | A1 | 08 November 2019 |
| | | | | CN | 110771086 | A | 07 February 2020 |
| | | | | CN | 110771086 | B | 23 August 2022 |
| | | | | EP | 3520312 | A1 | 07 August 2019 |
| | | | | EP | 3520312 | A4 | 18 September 2019 |
| | | | | EP | 3520312 | B1 | 02 February 2022 |
| | | | | JP | 2020-509617 | A | 26 March 2020 |
| | | | | JP | 6770171 | B2 | 14 October 2020 |
| | | | | KR | 10-2019-0067731 | A | 17 June 2019 |
| | | | | KR | 10-2019-0122616 | A | 30 October 2019 |
| | | | | KR | 10-2037326 | B1 | 28 October 2019 |
| | | | | MX | 2019002598 | A | 10 July 2019 |
| | | | | PH | 12019500260 | A1 | 21 October 2019 |
| | | | | RU | 2742044 | C1 | 02 February 2021 |
| | | | | US | 10355842 | B2 | 16 July 2019 |
| | | | | US | 10554360 | B2 | 04 February 2020 |
| | | | | US | 10594458 | B2 | 17 March 2020 |
| | | | | US | 10644855 | B2 | 05 May 2020 |
| | | | | US | 10999031 | B2 | 04 May 2021 |
| | | | | US | 2019-0182001 | A1 | 13 June 2019 |
| | | | | US | 2019-0238293 | A1 | 01 August 2019 |
| | | | | US | 2019-0356443 | A1 | 21 November 2019 |
| | | | | US | 2019-0379505 | A1 | 12 December 2019 |
| | | | | WO | 2019-112374 | A1 | 13 June 2019 |
| US | 2021-0410073 | A1 | 30 December 2021 | BR | 112019026152 | A2 | 30 June 2020 |
| | | | | BR | 112019026152 | B1 | 23 August 2022 |
| | | | | CA | 3067081 | A1 | 20 December 2018 |
| | | | | CN | 108811066 | A | 13 November 2018 |
| | | | | CN | 108811066 | B | 10 May 2019 |
| | | | | CN | 109151970 | A | 04 January 2019 |
| | | | | CN | 109151970 | B | 20 October 2023 |
| | | | | EP | 3442278 | A1 | 13 February 2019 |
| | | | | EP | 3442278 | B1 | 22 December 2021 |
| | | | | EP | 3955655 | A1 | 16 February 2022 |
| | | | | ES | 2907757 | T3 | 26 April 2022 |
| | | | | JP | 2020-523904 | A | 06 August 2020 |
| | | | | JP | 7028899 | B2 | 02 March 2022 |
| | | | | US | 10652829 | B2 | 12 May 2020 |
| | | | | US | 11122514 | B2 | 14 September 2021 |
| | | | | US | 11864121 | B2 | 02 January 2024 |
| | | | | US | 2019-0182777 | A1 | 13 June 2019 |
| | | | | US | 2020-0252878 | A1 | 06 August 2020 |
| | | | | WO | 2018-228465 | A1 | 20 December 2018 |

Form PCT/ISA/210 (patent family annex) (July 2022)